(19)

Europäisches
Patentamt
European
Patent Office
Office européen
des brevets

(11) **EP 1 871 090 A2**

(12) **EUROPEAN PATENT APPLICATION**

(43) Date of publication:
**26.12.2007  Bulletin 2007/52**

(51) Int Cl.:
***H04N 1/60*** *(2006.01)*

(21) Application number: **07109733.1**

(22) Date of filing: **06.06.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **21.06.2006  KR 20060055911
28.11.2006  KR 20060118550**

(71) Applicant: **Samsung Electronics Co., Ltd.
Suwon-si, Gyeonggi-Do (KR)**

(72) Inventors:
• **Kim, Gyong-ock
522-1306 Shinnamushil Shinsung 5-danji Apt.
Suwon-si
Gyeonggi-do (KR)**

• **Lee, Kang-hoon
Gyeonggi-do (KR)**
• **Jung, Joo-young
Gyeonggi-do (KR)**
• **Kim, Duk-yong
Gyeonggi-do (KR)**
• **Lee, Hee-ran
Seoul (KR)**

(74) Representative: **Clark, Charles Robert et al
Venner Shipley LLP
20 Little Britain
London EC1A 7DH (GB)**

(54) **System and method of adjusting print data**

(57)    A system and a method of adjusting colors of print data are provided. The system includes a printer driver converting a document transmitted from an application program into print data suitable for a printer and transmitting the print data to the printer. A soft proofing unit applies a soft proofing process to the print data converted by the printer driver. A display unit displays the print data obtained through the soft proofing process. A color lookup table (CLUT) supplies a color adjustment value to the print data when the print data is processed in the soft proofing unit. A system and a method of adjusting colors of print data is also provided to allow a user to accurately predict and adjust the colors of a printout, thereby obtaining the printout having the desired colors. Additionally, a method is provided of adjusting colors of print data to modify and apply a color lookup table (CLUT) for converting RGB image data into CMYK image data in a print driver by performing a soft proofing process and using a gradation chart for a preference of a user, thereby increasing user satisfaction of colors.

FIG. 2

**Description**

The present invention relates to a system and a method of adjusting print data, and particularly data directed to colors. More particularly, but not exclusively, the present invention relates to a system and a method of adjusting colors of print data in which a soft proofing process is applied to final print data obtained through a number of processes performed by a printer driver to allow a user to accurately predict and adjust the colors of a printout, thereby obtaining the printout having the desired colors.

As the use of digital cameras and color printers increases, the demand for enhanced image quality increases accordingly. A number of applications (application programs), such as a document editor or an image editor, provide a print previewing function or a soft proofing function of image or document data. However, in many cases, final output data for the image or document data is changed in the course of color and image adjustment processes performed by a printer driver or a printing process due to the hardware characteristics of a printer. As a result, the final output data forms an image different from that obtained in a 'print preview' or 'soft proof'. In other words, colors displayed on a screen of a display device are different from those appearing on a printout. Generally, the soft proofing is a process of proofing the appearance of a color image by means of the display device before the color image is output to a printer or the like.

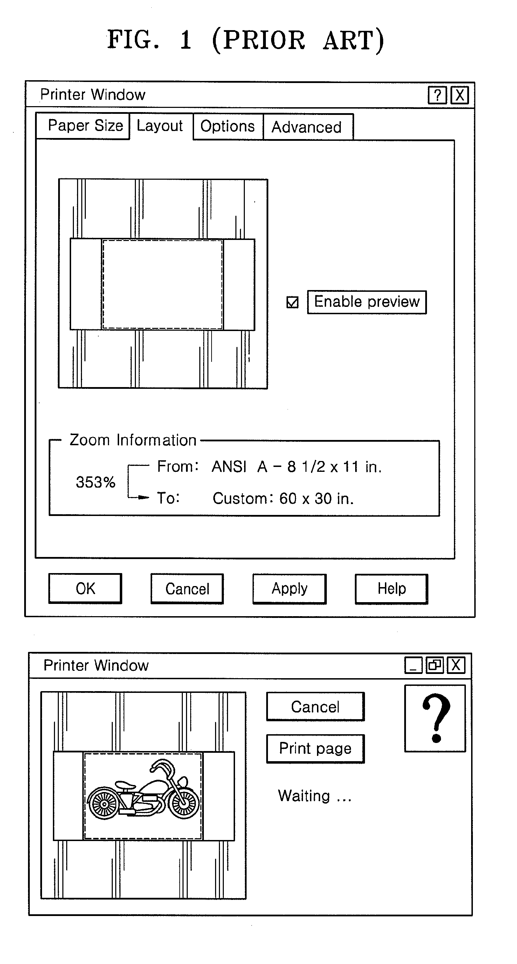

Figure 1 illustrates a conventional method of enhancing user satisfaction in the quality of a printout by adjusting data processed in applications, such as a document editing program or an image editing program, on a computer screen before the data is output through a printer.

As illustrated in Figure 1, a printer driver supporting a print preview function can preview a layout of a hard copy to be printed. The layout preview screen shown in Figure 1 is a print preview screen showing configuration information of the layout rather than showing actual data to be printed by the printer. The print preview screen shown in Figure 1 only provides the screen before generating print data, and it is not possible to see the actual preview of the hard copy to be printed.

When a user activates a print preview function by checking on an enable preview menu and selects (clicks) a confirmation (OK) button in the screen shown in Figure 1, a user can preview the print data before printing, as shown in figure 1. Although Figure 1 includes a print preview screen of the actual print data, detailed printing information, such as fine patterns and details of a corresponding data image, may be omitted in the print preview screen. When a user inputs a confirmation signal on the print preview screen shown in Figure 1, that is, when a user clicks a print page button, the printer driver converts data previewed on the print preview screen into data recognizable by the printer and transmits the converted data to the printer.

For example, in an image editing application such as Photoshop (Registered Trademark), a user can predict printed colors using the soft proofing function and then perform the printing by operating the printer driver. However, because the soft proofing process provided by the image editing application cannot predict changes in colors caused by a color matching algorithm and image processing performed by the printer driver, there is a problem in that it is difficult to realize precise soft proofing.

U.S. Patent No. 6,947,158 discloses a print output control method in which a printer driver performs image processing and a color matching process on output data in a coarse manner and the output data is stored in a file format, a print preview window is displayed on a display screen, the stored file is fetched from a memory, and an image adjustment is performed on the file in the print preview window, thereby performing printing based on the image adjusted file. U.S. Patent No. 6,947,158 allows output data to be adjusted in the print preview window. However, because the soft proofing is not applied to the output data, the image color adjusted in the print preview window may be changed in the course of color and image adjustment processes performed by the printer driver or in the course of a printing process due to the hardware characteristics of a printer, and as a result, the adjusted image color may be different from the image color on the printout.

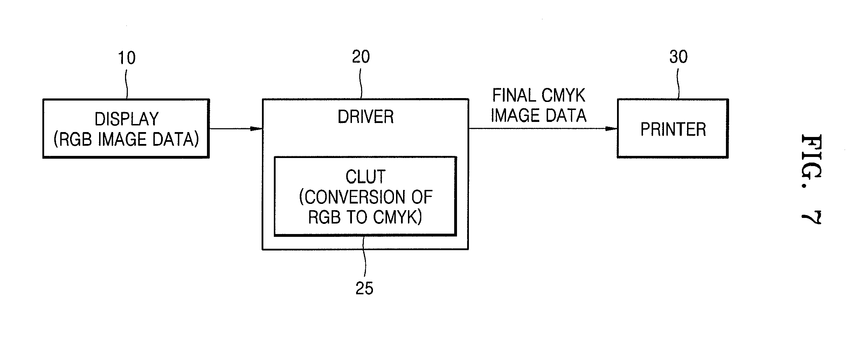

Additionally, operations for converting data performed by a driver in a related art are described with reference to Figure 7 (which is a diagrammatic view for printing general color image data related to an exemplary embodiment of the present invention). When a user outputs an image to a display 10, RGB image data is transmitted to a driver 20. When the RGB image data is transmitted to the driver 20, the driver converts the RGB image data into CMYK image data to be printed by a printer 30 by using a color lookup table (CLUT) 25 stored as a single form. When the driver 20 converts all of the RBG image data into CMYK image data, the driver 20 transmits the CMYK image data to the printer 30, and the printer 30 prints the transmitted CMYK image data. However, problems can occur in a conventional process or apparatus when the RGB image data is converted into the CMYK image data for output according to the related art, because the CLUT 25 comprises only a single form generated based on universal color characteristics.

Accordingly, a need exists for an improved system and method of adjusting colors of print data to obtain a printout having the desired colors.

The present invention aims to provide a system and a method of adjusting colors of print data in which a soft proofing process is applied to final print data obtained through a number of processes performed by a printer driver to allow a user to accurately predict and adjust the colors of a printout, thereby obtaining the printout having the desired colors.

The present invention also aims to provide a system and a method of adjusting colors of print data that solves the problem of a soft proofing process provided by a conventional image editing application (application program) being unable to predict changes in colors caused by a color matching algorithm or by image processing performed by a printer driver. As a result, the present invention aims to provide a printout having the desired colors.

The present invention also aims to provide a method of adjusting colors of print data to modify and apply a color lookup table (CLUT) for converting RGB image data into CMYK image data in a driver by performing a soft proofing process and using a gradation chart for a preference of a user, thereby increasing user satisfaction of reproduced colors.

According to an aspect of the present invention, there is provided a system for adjusting colors of print data, the system comprising a printer driver converting a document transmitted from an application program into print data suitable for a printer and transmitting the print data to the printer, and a soft proofing unit applying a soft proofing process to the print data converted by the printer driver. A display unit displays the print data obtained through the soft proofing process. A color lookup table (CLUT) supplies a color adjustment value to the print data when the print data is processed in the soft proofing unit.

The document may be an image document or a document including at least an image.

The printer driver may include a storage unit storing the print data, an interface unit performing the soft proofing process in cooperation with the soft proofing unit, a color lookup table update checking unit checking on whether or not the color lookup table is updated, and a color lookup table application unit applying the updated color lookup table to the print data.

The soft proofing unit may include an interface unit interfacing with the printer driver, a print data fetching unit fetching the print data stored in the printer driver, a soft proofing application unit applying the soft proofing process to the print data fetched by the print data fetching unit, a color value adjustment and input unit adjusting and inputting the color value, a color lookup table updating unit updating the color lookup table with the color value adjusted by the color value adjustment and input unit, and a display unit displaying the print data having the updated color lookup table applied thereto.

The color value adjustment may include adjustments of brightness, contrast, color balance, and preferred color selection, and the color value adjustment may be set through the display unit.

According to an aspect of the present invention, a method of adjusting colors of print data comprises converting a file created by an application program into print data suitable for printing, and adjusting colors of the print data using a soft proofing application. The print data is transmitted having the colors adjusted by the soft proofing application to a printer to output the print data from the printer.

The method may further include receiving a user confirmation for the print data having the colors adjusted by the soft proofing application.

The method may further include storing the converted print data in a storage unit.

The method may further include displaying the print data having the colors adjusted by the soft proofing application so that a user may confirm the print data.

The soft proofing application may use a color lookup table to adjust the colors of the print data.

The method may further include displaying the print data by applying the soft proofing application to the print data.

The color lookup table may be updated whenever a color value of the displayed print data is adjusted.

According to another aspect of the present invention, a method of adjusting colors of print data to represent a tendency of desired colors for a user includes loading a reference image to be used as a reference on a driver, and generating a new CLUT (color lookup table) applied to an international color consortium (ICC) profile of a printer by using the reference image.

The method may further include displaying the reference image loaded on the driver as a printer profile by performing a soft proofing process thereon. A gradation chart used for color modification as a printer profile is displayed by performing a soft proofing process thereon. A portion of colors to be modified in the reference image are selected. The selected colors from the reference image on the gradation chart are displayed. The colors displayed on the gradation chart are modified. The modified colors are applied to generate a new CLUT.

The method may further include generating a new ICC profile by using the generated CLUT, and displaying the new ICC profile by applying the reference image thereto.

The gradation chart may be a hue gradation chart.

The selecting of the portion of which the colors are to be modified in the reference image may include selecting a color or selecting several colors in a region.

Other objects, advantages and salient features of the invention will become apparent from the following detailed description, which, taken in conjunction with the annexed drawings, discloses exemplary embodiments of the invention.

The patent or application file contains at least one drawing executed in color. Copies of this patent or patent application publication with color drawing(s) will be provided by the Office upon request and payment of the necessary fee.

Embodiments of the present invention are now described by way of example, with reference to the attached drawings, in which:

Figure 1 is a diagram showing an example of a print preview screen of print data according to the conventional art;

Figure 2 is a block diagram showing a system for adjusting colors of print data according to an exemplary embodiment of the present invention;

Figure 3 is a flowchart showing a method of adjusting colors of print data according to an exemplary embodiment of the present invention;

Figure 4 is a flowchart showing processes performed by a printer driver and a soft proofing application, respectively, according to an exemplary embodiment of the present invention;

Figure 5 is a diagram showing an example of color adjustment performed by a soft proofing unit according to an exemplary embodiment of the present invention;

Figure 6 is a diagram showing an example of image modification performed by a display unit of a soft proofing unit according to an exemplary embodiment of the present invention;

Figure 7 is a diagrammatic view for printing general color image data related to another exemplary embodiment of the present invention;

Figure 8 is a flowchart showing a method of adjusting colors of print data according to another exemplary embodiment of the present invention;

Figure 9 is a conceptual view for explaining a color lookup table (CLUT) applied to another exemplary embodiment of the present invention;

Figures 10 to 13 are views of soft proofing images of each operation of a method of adjusting colors of print data according to another exemplary embodiment of the present invention; and

Figure 14 is a diagramattic view of a process of generating a new CLUT according to another exemplary embodiment of the present invention.

Throughout the drawings, like reference numerals will be understood to refer to like parts, components and structures.

The present invention will now be described more fully with reference to the accompanying drawings, in which exemplary embodiments of the invention are shown. The invention may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art.

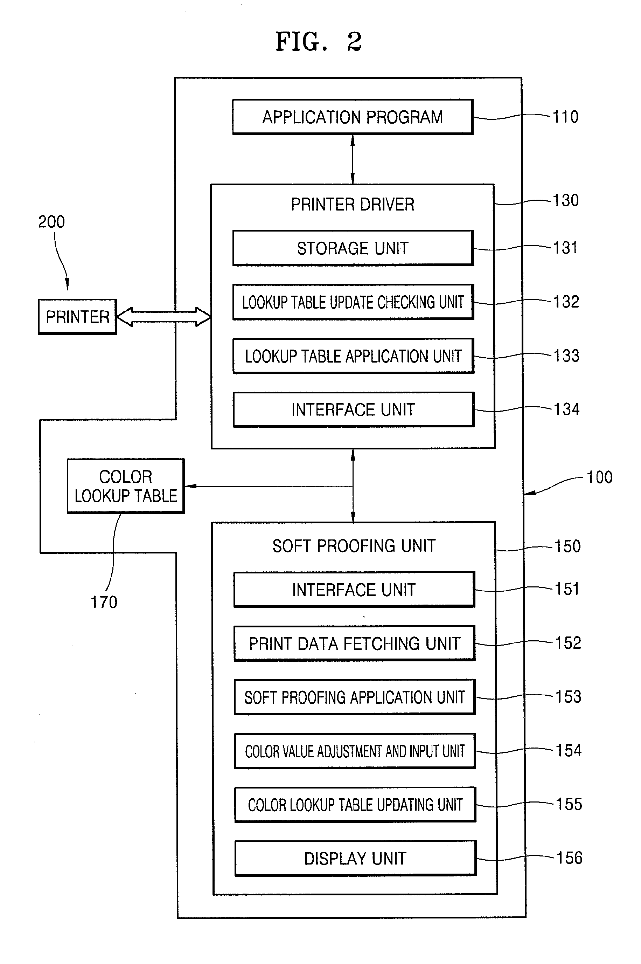

Referring to Figure 2, the system for adjusting the colors of print data according to an exemplary embodiment of the present invention includes a printer driver 130 converting a document transmitted from an application program 110 (for example, a document editor, an image editor, or the like) installed and operated in a computer 100 into print data suitable for a printer 200 and transmitting the print data to the printer 200. A soft proofing unit 150 applies a soft proofing process to the print data converted by the printer driver 130. A color lookup table (CLUT) 170 supplies a color adjustment value to the final print data when the print data is processed in the soft proofing unit 150. The soft proofing unit 150 includes a display unit 156 displaying the print data having the soft proofing application applied thereto. The document may contain only images or a mixture of images and other data.

The printer driver 130 includes a storage unit 131 (for example, a frame buffer) storing the print data converted into a format suitable for the printer 200, an interface unit 134 performing the soft proofing process in cooperation with the soft proofing unit 150, a color lookup table update checking unit 132 checking on whether the color lookup table 170 is updated or not, and a color lookup table application unit 133 applying the updated color lookup table 170 to the print data.

The soft proofing unit 150 includes an interface unit 151 for interfacing with the printer driver 130, a print data fetching unit 152 for fetching the print data stored in the storage unit 131 of the printer driver 130, a soft proofing application unit 153 for applying the soft proofing process to the print data fetched by the print data fetching unit 152, a color value adjustment and input unit 154 for adjusting and inputting the color value, a color lookup table updating unit 155 for updating the color lookup table 170 with the color value adjusted by the color value adjustment and input unit 154, and a display unit 156 for displaying the print data having the updated color lookup table 170 applied thereto.

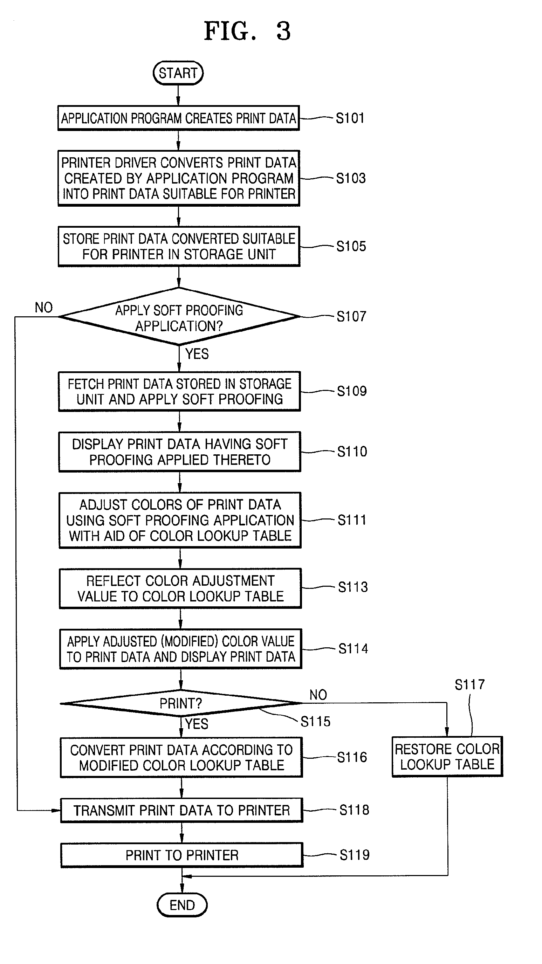

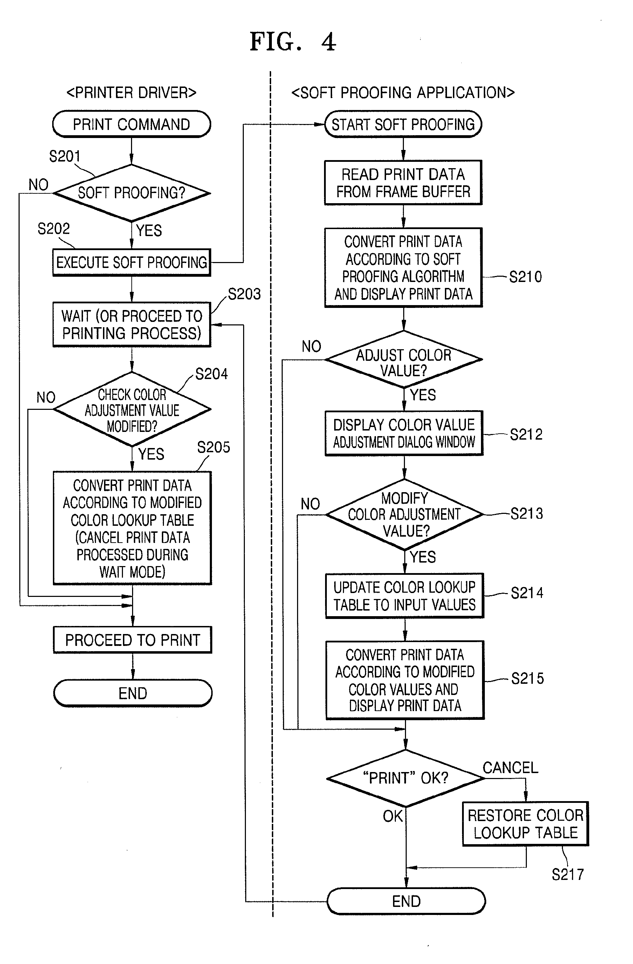

Hereinafter, processes performed by the system for adjusting colors of print data according to an exemplary embodiment of the present invention is described with reference to Figures 2 to 4.

First, when a user inputs a command for printing a document to an application program (for example, a word processor, Photoshop ®, or the like) (operation S201), the printer driver 130 converts data of the document created by the application program into print data recognizable by the printer 200 by means of a conventional method (operation S101 and operation S103). The print data that is converted by the printer driver 130 into a format suitable for the printer 200 is stored in the storage unit 131 (for example, a frame buffer) (operation S105). In an exemplary embodiment of the present invention, the print data stored in the storage unit 131 will be transmitted to the printer 200 and printed out from the printer 200. In other words, when the print data that is converted into a format suitable for the printer 200 is stored in the storage unit 131, the print data stored in the storage buffer 131 is transmitted to the printer 200 and output from the printer 200 through a printing process (operation S118 and operation S119), if a user does not execute a soft proofing application (operations S107 and S202).

On the other hand, if a user executes the soft proofing application when the print data is converted to be suitable for the printer 200 is stored in the storage unit 131 (operation S107), the soft proofing process is applied to the print data (operation S109 and S203). The soft proofing application, in a substantially similar manner to the case of a print preview application, is executed when a user inputs an execution command within a predetermined period of time after the print data is stored in the storage unit 131 (for example, the frame buffer).

If the execution of the soft proofing application is selected in operation S107, the print data fetching unit 152 fetches the print data stored in the storage unit 131, and the display unit 156 displays the print data having the soft proofing process applied thereto (operations S109 and S110). When the print data fetching unit 152 fetches the print data stored in the storage unit 131, the soft proofing application unit 153 applies the color lookup table 170 to the print data and provides a user with the soft proofing (operation S210). In an exemplary embodiment of the present invention, it might be possible to utilize the soft proofing applications and the soft proof providing methods that are well known in the art.

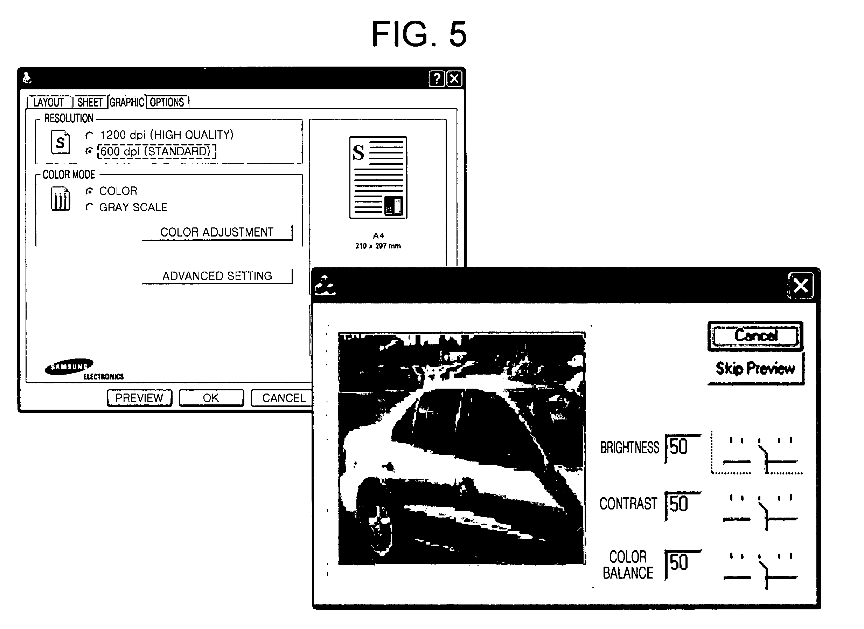

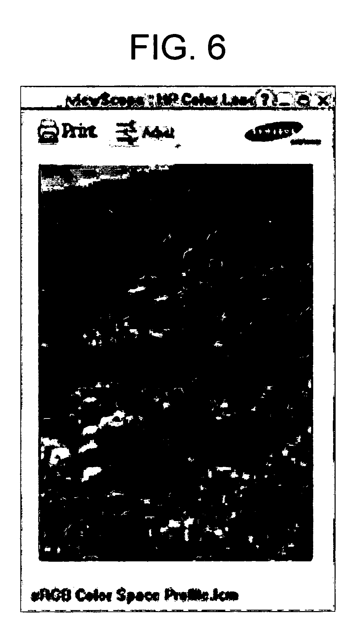

When a user wants to adjust colors of the print data in the soft proofing process, the color value adjustment and input unit 154 receives color adjustment values for the print data, such as brightness, contrast, color balance, and preferred color selection, from a user through a soft proofing input window, as shown in Figures 5 and 6 (operations S111 and S212). Whenever a user inputs a new color adjustment value through the color value adjustment and input unit 154 (operation S213), the color lookup table update unit 155 of the soft proofing unit 150 updates the new color adjustment value input through the color value adjustment and input unit 154 in the color lookup table 170 (operations S113 and S214). Then, the soft proofing unit 150 applies the color lookup table 170 having the new color adjustment value updated therein (that is, the updated color lookup table) to the print data, and the display unit 156 displays the print data having the updated color lookup table applied thereto to allow a user to perform the soft proofing in a real time manner (operations S114 and S215).

When the soft proofing of the print data is completed, whether or not to print the print data is determined through the display screen having the soft proofing applied thereto as shown in Figure 6 (operation S115). When a print button is pressed on the display screen in Figure 6, colors of the print data are converted in accordance with the updated (modified) color lookup table and transmitted to the printer driver 130 through the interface 151 (operation S116, operation S118). When the print data is received at the printer driver 130, the color lookup table update checking unit 132 checks on whether the color lookup table 170 is updated or not (operation S204). When the color lookup table 170 is updated, the color lookup table application unit 133 applies the updated color lookup table 170 to a final print data and transmits the final print data to the printer 200 to be printed out therefrom (operation S118, operation S119 and operation S205). On the other hand, when a user does not want to print the print data in operation 115, the process is terminated by restoring the updated color lookup table 170 to the previous color lookup table 170 (operations S117 and S217).

According to exemplary embodiments of the present invention, it is possible to perform the soft proofing process based on a more accurate result by applying the soft proofing process to final print data obtained through a number of processes performed by the printer driver.

Hereinafter, a method of adjusting colors of print data according to another exemplary embodiment of the present invention is described in detail.

When a color of an output image is different from a desired color for a user who wants to print print data with the desired color, the user may use a method of modifying colors of an original image or modifying colors by using a color adjustment tab in a print driver. However, according to the former method, the original image may be damaged. According to the latter method, there are problems in that the modification of the color that is to be accurately modified by the user is equivocal, and other colors may be influenced. Additionally, a setting must always be changed when printing. Therefore, an object of the present invention is that when a profile of a printer used by a user has a color lookup table type, the color lookup table may be easily modified, and the user may print an image with a desired color.

An ICC profile of the printer used in an exemplary embodiment has a color lookup table (CLUT) type. A concept of the CLUT is described as follows by using a $17\times17\times17$ CLUT as an example of the CLUT type.

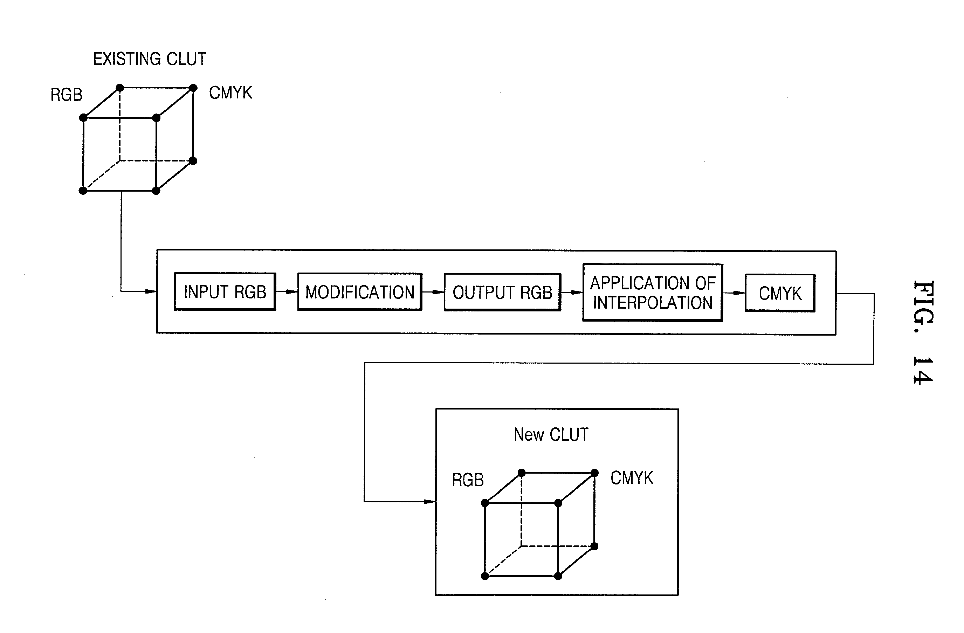

The CLUT $17\times17\times17$ divides RGB values into 17 levels, respectively, to match the values to cyan magenta yellow black (CMYK) colors to be printed by the printer in advance. When an RGB value is coincident with the CLUT, in other words, when each RGB value is a 17 multiple number, the RGB value is output as the CMYK value stored in a corresponding position of the CLUT. In Figure 14, each angle point is accurately coincident with the 17 multiple number. However, inner points CP are not accurately coincident with the 17 multiple number. An RGB value corresponding to the inner point CP is predicted by using a trilinear interpolation or a tetrahedral interpolation with reference to adjacent colors. In the current exemplary embodiment of the present invention, the division number of the CLUT may be $9\times9\times9$, $33\times33\times33$, or the like.

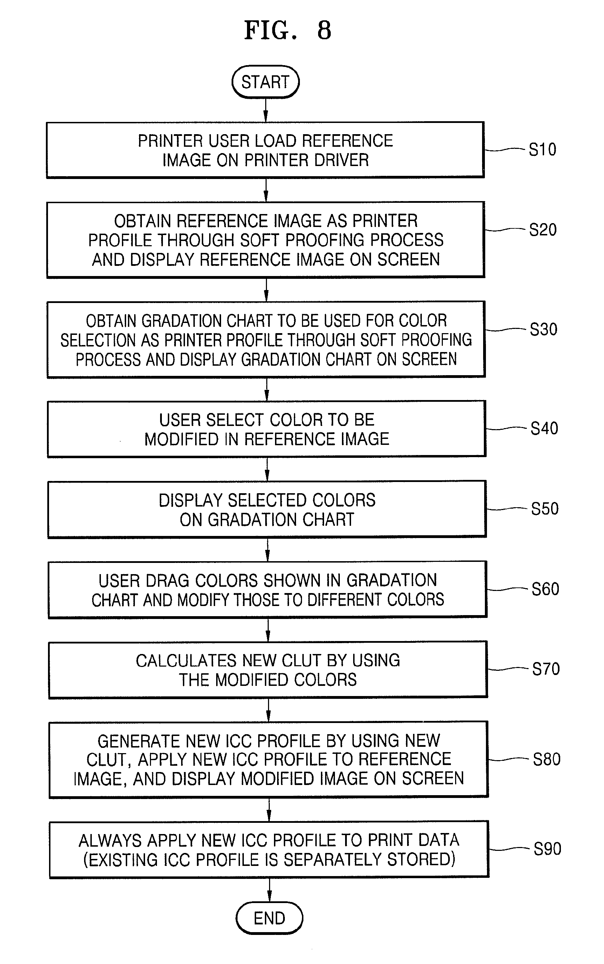

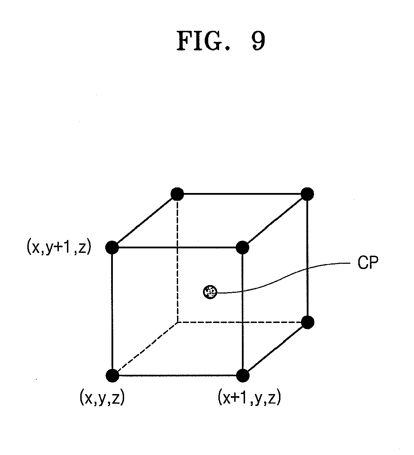

Hereinafter, a method of adjusting colors of print data according to another exemplary embodiment of the present invention will be described in detail with reference to Figures 8 to 14.

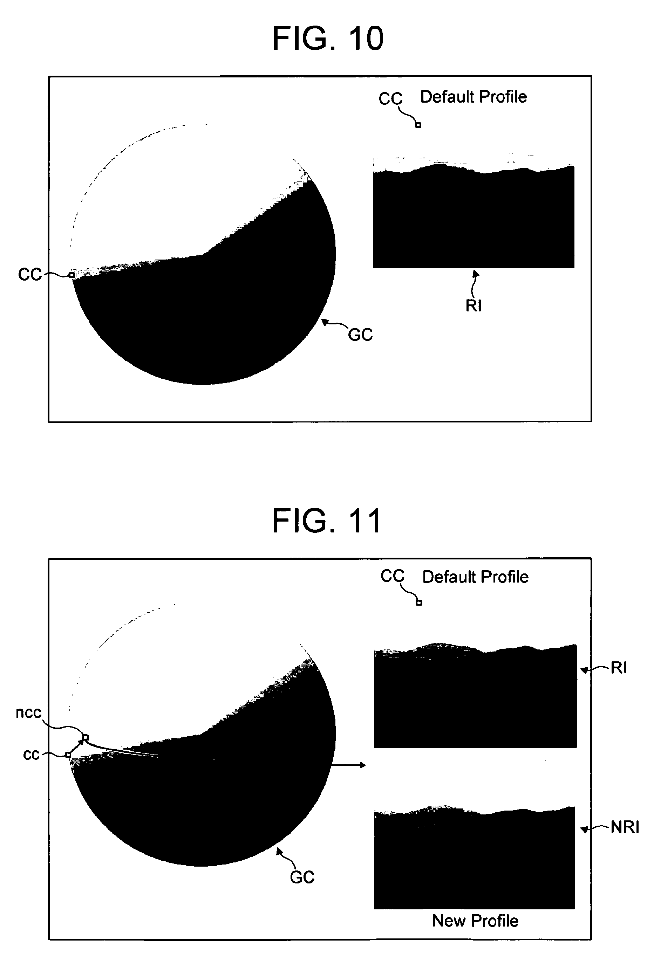

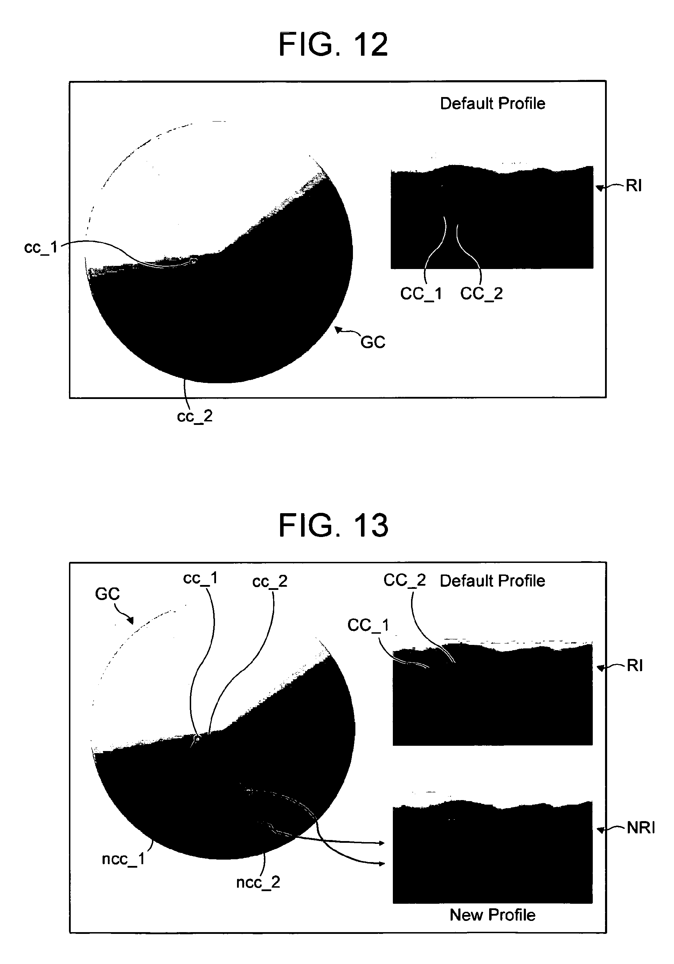

As shown in Figure 10, a printer user loads a reference image (RI) to be used as a reference for color conversion on a printer driver 20 (shown in Figure 12) (operation S10). When the reference image RI is loaded on the driver 20, the reference image RI is obtained as a printer profile through the soft proofing process and displayed on a screen (operation S20). The reference image RI is obtained through the soft proofing process, so that colors of actual print image may be shown. Next, a gradation chart GC to be used for color selection is obtained as a printer profile through the soft proofing process and displayed on a screen (operation S30). In the current exemplary embodiment of the present invention, as the gradation chart GC, a hue gradation chart may be used. However, an XYZ gradation chart or a lab gradation chart may also be used.

When operation S30 is completed, the user selects a color to be modified in the reference image RI (operation S40). To select the color to be modified, the user clicks a color CC as shown in Figure 10 or drags several colors CC_1 and CC_2 as shown in Figure 12. When the user selects the colors to be modified in the reference image RI, the driver displays the selected colors as CC, CC_1, and CC_2 on the gradation chart GC as shown in Figure 10 and 12 (operation S50).

When the user selects a region rather than a color in operation S40, displaying all colors in the region on the gradation chart GC may confuse the user. As a result, only a representative color affecting the selected region may be displayed. The representative color may be one or more according to the selected region.

When the user selects a region in operation S40, a process for searching for a representative color is as follows.

In this example, it is assumed that a grid of the CLUT of the printer profile is 17x17x17. When the user, for example, drags a region in the reference image RI, the printer driver performs the following calculation for each color in the region. For example, when the RGB value is RGB(154, 234, 64), a grid point that may affect this color divides each color value by 17 and obtains a value with first decimal point, adds 0.5 thereto, and removes a value below the decimal point. Namely, when the RGB(154, 234, 64) is divided by 17, it becomes CLUT(9.0, 13.7, 3.7). When 0.5 is added thereto and the value below the decimal point is removed, that is rounded, it becomes CLUT(9, 14, 4).

The CLUT(9, 14, 4) value becomes a decisive position for representing the color selected by the user. To represent the value as the RGB again, each value is multiplied by 17. Therefore, the CLUT(9, 14, 4) becomes RGB(153, 238, 68).

When the aforementioned process is applied to all colors in the reference image region, a CLUT set representing a representative color in the region is obtained.

When the representative color is obtained, an RGB value coincident with the representative color is searched for in the region. When the coincident RGB value exists, the corresponding RGB value is displayed on the user reference image RI and the gradation chart GC. However, when the RGB value accurately coincident with the representative color does not exists, by using the distance formula for the distance between two points in a space, an RGB value disposed at a closest position to the representative color is searched, and the corresponding value is displayed on the reference image RI and the gradation chart GC.

For reference, the distance formula for the distance between two points in a space is as follows. When the two points are (x1, y1, z1) and (x2, y2, z2), the distance between the two points in a space is obtained by the following formula 1.

[Formula 1]

$$R = \sqrt{(x2 - x1)^2 + (y2 - y1)^2 + (z2 - z1)^2}$$

When operation S50 is completed, the user drags the colors CC, CC_1, and CC_2 shown in the gradation chart GC as shown in Figures 11 and 13 and modifies those to different colors NCC, NCC_1, and NCC_2 which are desired colors for the user (operation S60). In Figures 11 and 13, a new profile applying the modified colors in the grated chart GC is denoted by NRI.

When the colors are modified in the gradation chart GC in operation S60, the printer driver calculates a new CLUT by using the modified colors NCC, NCC_1, and NCC_2 (operation S70). This is described with reference to Figure 14.

First, when the modified R'G'B' value is changed as compared with the RGB value before modification when a new CLUT is generated, a side effect, such as a tone jump, may occur.

Therefore, a new CLUT may be generated with minimizing the side effect. A method of minimizing the side effect is as follows.

It is assumed that the RGB value before modification is denoted by BeforeRGB, the R'G'B value after modification is denoted by CenterRGB, and a difference between the two values (CenterRGB - BeforeRGB) is denoted by (ΔR, ΔG, ΔB), respectively. Next, a Gaussian normal distribution curve is applied to all input RGB by using a change in the modified CenterRGB as a weight W, a new CLUT may be obtained with minimizing the side effect. A conversion formula associated with this is represented as the following formula 2.

[Formula 2]

$$\left(R_{out}, G_{out}, B_{out}\right) = \left(R_{in}, G_{in}, B_{in}\right) + \left(\Delta R, \Delta G, \Delta B\right) * W\left(R, G, B\right)$$

$$W\left(R, G, B\right) = e^{-\frac{\left(InputRGB - CenterRGB\right)^2}{2*\pi*\sigma^2}}$$

In formula 2, σ denotes a deviation range and may use a value verified by characteristics of the printer and a color change width.

By using the formula 2, a CMYK conversion is performed on each output RGB value for each input grid of a CLUT by using a CLUT of the existing printer profile, a new CMYK CLUT for the input RGB may be generated.

A printer profile is generated by using the new CLUT generated in operation 80, and a soft proofing process is performed on the reference image input by the user by using the printer profile, and modified image is then displayed on a screen (operation S80). Thereafter, finally modified printer profile is applied thereto, a modification in colors selected by the user may be always applied to the print data (operation S90). The existing ICC profile may be additionally stored and restored as needed.

Accordingly, in the current exemplary embodiment of the present invention, the CLUT included in the ICC profile may be directly adjusted to represent a tendency of desired colors for the user, so that it is possible to increase user satisfaction of print colors.

According to exemplary embodiments of the present invention, it is possible to apply a soft proofing process to final print data obtained through a number of processes performed by a printer driver to allow a user to accurately predict and adjust the colors of a printout, thereby obtaining the printout having desired colors.

According to exemplary embodiments of the present invention, it is possible to solve a problem in that a soft proofing process provided by a conventional image editing application (application program) cannot predict changes in colors caused by a color matching algorithm or by image processing performed by a printer driver, thereby obtaining a printout having the desired colors.

According to exemplary embodiments of the present invention, in the method of adjusting colors of print data, a CLUT for converting the RGB image data into the CMYK image data may be modified and applied by performing a soft proofing process and using a gradation chart for a preference of the user, so that it is possible to increase user satisfaction of colors.

The exemplary embodiments of the present invention may be written as computer programs and may be implemented in general-use digital computers that execute the programs using a computer readable recording medium. Examples of the computer readable recording medium include magnetic storage media (for example, ROM, floppy discs, hard discs, and so forth), optical recording media (for example, CD-ROMs, or DVDs and the like), and storage media such as carrier waves (for example, transmission through the Internet).

While the present invention has been particularly shown and described with reference to exemplary embodiments thereof, it will be understood by those skilled in the art that various changes in form and details may be made therein without departing from the spirit of the invention as defined by the appended claims.

**Claims**

1. A system for adjusting colors of print data, comprising:

a printer driver arranged to convert a document received from an application program into print data for use by a printer and to transmit the print data to the printer;

a soft proofing means arranged to apply a soft proofing process to the print data converted by the printer driver;

a display unit arranged to display the print data obtained via the soft proofing process; and

a color lookup table (GLUT) arranged to supply a color adjustment value to the print data when the print data is processed by the soft proofing means.

**2.** The system of claim 1, further comprising a storage unit for storing the print data.

**3.** The system of claim 1, wherein the printer driver comprises:

an interface unit arranged to perform the soft proofing process in cooperation with the soft proofing means; and
means for checking whether the color lookup table is up to date.

**4.** The system of claim 1, 2 or 3, wherein the printer driver further comprises means for applying updated color lookup table to the print data.

**5.** The system of claim 1, wherein the soft proofing means comprises:

an interface unit arranged to interface with the printer driver;
means for fetching print data stored in the printer driver; and
means for applying the soft proofing process to the print data fetched by the fetching means.

**6.** The system of claim 1 or 5, wherein the soft proofing unit further comprises:

means for adjusting and inputting the color value;
means for updating the color lookup table with the adjusted color value obtained from the color value adjustment and input means; and
a display unit for displaying the print data having the updated color lookup table applied thereto.

**7.** The system of claim 1 or 6, wherein the color value adjustment includes any adjustment of brightness, contrast, color balance, and preferred color selection, and
wherein the color value adjustment is set using the display unit.

**8.** A method of adjusting colors of print data, the method comprising:

converting a file created by an application program into print data suitable for printing;
adjusting colors of the print data using a soft proofing application; and
transmitting the print data having the colors adjusted by the soft proofing application to a printer to output the print data from the printer.

**9.** A method of adjusting colors of print data, comprising the steps of
storing print data in a storage unit;
displaying the stored print data;
adjusting colors of the print data using a soft proofing application;
displaying the adjusted print data; and
transmitting the adjusted print data to a printer to be printed.

**10.** The method of claim 8 or 9, further comprising receiving a user confirmation for the print data having the colors adjusted by the soft proofing application.

**11.** The method of claim 8 or 9, further comprising storing the converted print data in a storage unit.

**12.** The method of claim 10, further comprising displaying the print data having the colors adjusted by the soft proofing application for a user to confirm the print data.

**13.** The method of claim 8 or 9, wherein the soft proofing application uses a color lookup table to adjust the colors of the print data.

**14.** The method of claim 8 or 9, further comprising applying the soft proofing application to the print data and displaying the print data.

**15.** The method of claim 14, wherein the color lookup table is updated whenever a color value of the displayed print data is adjusted.

**16.** The method according to any of claims 8 to 15,
wherein the color value adjustment includes adjustment of any of brightness, contrast, color balance, and preferred color selection, and
wherein the color value adjustment is set by using the display unit of the soft proofing application.

**17.** A method of adjusting colors of print data to represent a tendency of desired colors for a user, comprising:

loading a reference image to be used as a reference on a driver; and
generating a new color lookup table (CLUT) applied to an ICC profile of a printer by using the reference image.

**18.** The method of claim 17, further comprising:

displaying the reference image loaded on the driver as a printer profile by performing a soft proofing process thereon;
displaying a gradation chart used for color modification as a printer profile by performing a soft proofing process thereon;
selecting a portion of which colors are to be modified in the reference image;
displaying the selected colors from the reference image on the gradation chart;
modifying the colors displayed on the gradation chart; and
applying the modified colors to generate a new CLUT.

**19.** The method of claim 17 or 18, further comprising:

generating a new ICC profile by using the generated CLUT; and
displaying the new ICC profile by applying the reference image thereto.

**20.** The method of claim 18, wherein the selecting the portion of which colors are to be modified in the reference image comprises selecting a color or selecting several colors in a region.

**21.** A computer readable medium on which a computer-executable program for providing a print preview of a print document is recorded, the computer-executable program comprising instructions which, when run on a computer, carryout the steps of any of method claims 8 to 20.

# FIG. 1 (PRIOR ART)

Printer Window    [?][X]

| Paper Size | Layout | Options | Advanced |

☑ Enable preview

**Zoom Information**

353%   From:   ANSI A – 8 1/2 x 11 in.
        To:     Custom: 60 x 30 in.

| OK | Cancel | Apply | Help |

---

Printer Window    [_][▢][X]

Cancel

Print page

?

Waiting ...

# FIG. 2

APPLICATION PROGRAM — 110

PRINTER DRIVER — 130

200

PRINTER

STORAGE UNIT — 131

LOOKUP TABLE UPDATE CHECKING UNIT — 132

LOOKUP TABLE APPLICATION UNIT — 133

INTERFACE UNIT — 134

— 100

COLOR
LOOKUP TABLE

170

SOFT PROOFING UNIT — 150

INTERFACE UNIT — 151

PRINT DATA FETCHING UNIT — 152

SOFT PROOFING APPLICATION UNIT — 153

COLOR VALUE ADJUSTMENT AND INPUT UNIT — 154

COLOR LOOKUP TABLE UPDATING UNIT — 155

DISPLAY UNIT — 156

# FIG. 3

START

APPLICATION PROGRAM CREATES PRINT DATA —— S101

PRINTER DRIVER CONVERTS PRINT DATA
CREATED BY APPLICATION PROGRAM —— S103
INTO PRINT DATA SUITABLE FOR PRINTER

STORE PRINT DATA CONVERTED SUITABLE —— S105
FOR PRINTER IN STORAGE UNIT

APPLY SOFT PROOFING
APPLICATION? —— S107

NO

YES

FETCH PRINT DATA STORED IN STORAGE —— S109
UNIT AND APPLY SOFT PROOFING

DISPLAY PRINT DATA HAVING SOFT —— S110
PROOFING APPLIED THERETO

ADJUST COLORS OF PRINT DATA
USING SOFT PROOFING APPLICATION —— S111
WITH AID OF COLOR LOOKUP TABLE

REFLECT COLOR ADJUSTMENT —— S113
VALUE TO COLOR LOOKUP TABLE

APPLY ADJUSTED (MODIFIED) COLOR VALUE —— S114
TO PRINT DATA AND DISPLAY PRINT DATA

PRINT?          NO                    S117

YES    S115

CONVERT PRINT DATA ACCORDING TO —— S116          RESTORE COLOR
MODIFIED COLOR LOOKUP TABLE                        LOOKUP TABLE

TRANSMIT PRINT DATA TO PRINTER —— S118

PRINT TO PRINTER —— S119

END

# FIG. 4

<PRINTER DRIVER>

PRINT COMMAND

S201
SOFT PROOFING? — NO
YES

S202
EXECUTE SOFT PROOFING

S203
WAIT (OR PROCEED TO PRINTING PROCESS)

S204
CHECK COLOR ADJUSTMENT VALUE MODIFIED? — NO
YES

S205
CONVERT PRINT DATA ACCORDING TO MODIFIED COLOR LOOKUP TABLE (CANCEL PRINT DATA PROCESSED DURING WAIT MODE)

PROCEED TO PRINT

END

<SOFT PROOFING APPLICATION>

START SOFT PROOFING

READ PRINT DATA FROM FRAME BUFFER

CONVERT PRINT DATA ACCORDING TO SOFT PROOFING ALGORITHM AND DISPLAY PRINT DATA — S210

ADJUST COLOR VALUE? — NO
YES

DISPLAY COLOR VALUE ADJUSTMENT DIALOG WINDOW — S212

MODIFY COLOR ADJUSTMENT VALUE? — S213 — NO
YES

UPDATE COLOR LOOKUP TABLE TO INPUT VALUES — S214

CONVERT PRINT DATA ACCORDING TO MODIFIED COLOR VALUES AND DISPLAY PRINT DATA — S215

"PRINT" OK? — CANCEL
OK

RESTORE COLOR LOOKUP TABLE — S217

END

# FIG. 5

EP 1 871 090 A2

# FIG. 6

# FIG. 7

DISPLAY
(RGB IMAGE DATA)
10

DRIVER
20

CLUT
(CONVERSION OF
RGB TO CMYK)
25

FINAL CMYK
IMAGE DATA

PRINTER
30

# FIG. 8

START

PRINTER USER LOAD REFERENCE IMAGE ON PRINTER DRIVER — S10

OBTAIN REFERENCE IMAGE AS PRINTER PROFILE THROUGH SOFT PROOFING PROCESS AND DISPLAY REFERENCE IMAGE ON SCREEN — S20

OBTAIN GRADATION CHART TO BE USED FOR COLOR SELECTION AS PRINTER PROFILE THROUGH SOFT PROOFING PROCESS AND DISPLAY GRADATION CHART ON SCREEN — S30

USER SELECT COLOR TO BE MODIFIED IN REFERENCE IMAGE — S40

DISPLAY SELECTED COLORS ON GRADATION CHART — S50

USER DRAG COLORS SHOWN IN GRADATION CHART AND MODIFY THOSE TO DIFFERENT COLORS — S60

CALCULATES NEW CLUT BY USING THE MODIFIED COLORS — S70

GENERATE NEW ICC PROFILE BY USING NEW CLUT, APPLY NEW ICC PROFILE TO REFERENCE IMAGE, AND DISPLAY MODIFIED IMAGE ON SCREEN — S80

ALWAYS APPLY NEW ICC PROFILE TO PRINT DATA (EXISTING ICC PROFILE IS SEPARATELY STORED) — S90

END

# FIG. 9

# FIG. 10

CC    Default Profile

CC

GC

RI

# FIG. 11

CC    Default Profile

ncc

cc

GC

RI

NRI

New Profile

# FIG. 12

Default Profile

cc_1

cc_2

RI

CC_1  CC_2

GC

# FIG. 13

GC    cc_1    cc_2    CC_2  Default Profile

CC_1

RI

ncc_1

NRI

ncc_2

New Profile

# FIG. 14

EXISTING CLUT

RGB

CMYK

INPUT RGB

MODIFICATION

OUTPUT RGB

APPLICATION OF INTERPOLATION

CMYK

New CLUT

RGB

CMYK

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6947158 B